Europäisches Patentamt

European Patent Office

Office européen des brevets

(19)

(11) Veröffentlichungsnummer: **0 249 220**

**A1**

(12) # EUROPÄISCHE PATENTANMELDUNG

(21) Anmeldenummer: **87108400.0**

(22) Anmeldetag: **10.06.87**

(51) Int. Cl.⁴: **H04B 3/44**

(30) Priorität: **13.06.86 DE 3619858**

(43) Veröffentlichungstag der Anmeldung:
**16.12.87 Patentblatt 87/51**

(84) Benannte Vertragsstaaten:
**AT BE CH DE ES FR GB GR IT LI NL SE**

(71) Anmelder: **Siemens Aktiengesellschaft Berlin und München**
**Wittelsbacherplatz 2**
**D-8000 München 2(DE)**

(72) Erfinder: **Ziegler, Alfred, Dipl.-Ing.**
**Laimer Platz 1**
**D-8000 München 21(DE)**

(54) **Schaltungsanordnung zum selbsttätigen Verbinden der Fernspeisestrompfade einer Fernspeiseschleife.**

(57) Bei einer Schaltungsanordnung zum selbsttätigen Verbinden der Fernspeisestrompfade (91,92) einer beidseitig gespeisten Fernspeiseschleife zur Speisung elektrischer Verbraucher mittels Gleichstrom-Reihenspeisung ist zur Gewinnung von einem Speiseausgang (41,42) je Fernspeisestrompfad eine über Diodenstromzweige (51a,51b,52a,52b) vorgenommene Parallelschaltung aus einer zwei Speiseausgänge aufweisenden ersten Vierpolschaltung und einer einen durch Stromsensoren steuerbaren Verbindungszweipol enthaltenden zweiten Vierpolschaltung vorgesehen. Die Schaltungsanordnung läßt sich vorteilhaft zur Fernspeisung von Regeneratoren in Nachrichtenübertragungsstrecken verwenden.

FIG 3

EP 0 249 220 A1

# Schaltungsanordnung zum selbsttätigen Verbinden der Fernspeisestrompfade einer Fernspeiseschleife

In Zwischenverstärkerstellen von Nachrichtenübertragungsstrecken, Stationen von Fernwirkeinrichtungen oder in Verbindung mit ferngespeisten Verbrauchern anderer Art können sogenannte Schaltzusätze vorgesehen sein, die die Fernspeisestrompfade miteinander verbinden, sobald der Fernspeisestrom unter einen vorgegebenen Mindestwert sinkt. Damit bleibt im Falle einer Unterbrechung der Fernspeiseschleife jeweils der Abschnitt von der Fernspeisestromquelle bis zu dem vor der Unterbrechungsstelle gelegenen Schaltzusatz weiter in Betrieb. Tritt bei einer Nachrichtenübertragungseinrichtung eine Unterbrechung der Nachrichtenübertragungsstrecke und damit auch der Fernspeiseschleife auf, so bleibt jeweils der Streckenteil bis zum fehlerhaften Verstärkerfeld in Betrieb, so daß dieses über eine systemeigene Fehlerortungseinrichtung ermittelt werden kann. Eine solche Fehlerortungseinrichtung kann z.B. in den Zwischenstellen Kennfrequenzgeneratoren und in der oder den Endstellen eine Vorrichtung zur Auswertung und Anzeige der empfangenen Kennfrequenzen enthalten.

Die Erfindung bezieht sich auf eine wie im Oberbegriff des Patentanspruchs 1 angegebene Schaltungsanordnung zum selbsttätigen Verbinden der Fernspeisestrompfade einer Fernspeiseschleife.

Eine derartige Schaltungsanordnung bzw. ein solcher Schaltzusatz ist bereits aus der DE-PS 30 03 515 bekannt.

Der bekannte Schaltzusatz ist für Nachrichtenübertragungsstrecken vorgesehen, die von beiden Endstellen aus ferngespeist werden. Der Schaltzusatz schaltet unabhängig von der Energieflußrichtung stets in der Zwischenverstärkerstelle, die sich vor der Unterbrechungsstelle befindet, den Querzweig ein. Dabei wird der Schleifenschluß über den Querzweig so hergestellt, daß der dort befindliche Verbraucher weiterhin mit Fernspeisestrom versorgt bleibt.

Der bekannte Schaltzusatz enthält ein Relais mit einem Ruhekontakt, der im Querzweig angeordnet ist und der bei unterbrochener Fernspeiseschleife den gewünschten Schleifenschluß herstellt. Das Relais hat zwei Erregerwicklungen, die zu beiden Seiten des Querzweiges in einem der beiden Fernspeisestromzweige angeordnet sind und die als Stromsensoren dienen. Der andere Fernspeisestrompfad ist durch einen oder mehrere Verbraucher belastet. Hierdurch ergibt sich am Orte des Schaltzusatzes eine unsymmetrische Belastung der Fernspeiseschleife.

Ferner ist aus der DE-OS 29 48 269 bereits eine Schaltungsanordnung zur Fernspeisung von Zwischenstellen einer Einrichtung der Nachrichtenübertragungstechnik bekannt, bei der die Ausgangsspannung einer Speisestelle überwacht wird. Dabei wird am Ausgang der Speisestelle die Polung der beiden jeweils auf Bezugspotential bezogenen Ausgangsteilspannungen überwacht. Als Kriterium für eine Fehlermeldung dient eine Umpolung wenigstens einer der beiden Ausgangsteilspannungen. Auf diese Weise ist es möglich, die Isolation des Fernspeisestromkreises zu überwachen. Schaltzusätze sind dabei nicht vorgesehen. Ordnet man Schaltzusätze, wie sie aus der genannten DE-OS 30 03 515 bekannt sind, in der Fernspeiseschleife so an, daß die Verbraucher abwechselnd in den einen oder anderen Fernspeisestrompfad eingeschleift sind, so ergibt sich eine nur näherungsweise symmetrische Belastung der Fernspeisestrompfade, was zum Ansprechen dieser Überwachung führen kann.

Aus der genannten DE-OS 30 03 515 ist ferner eine Schaltungsanordnung zur Fernspeisung bekannt, bei der in Verbindung mit einem Schaltzusatz jeweils zwei Verbraucher in je einen der beiden Fernspeisestrompfade eingeschleift sind. Die dabei verwendeten Schaltzusätze sind nur für einseitig gespeiste Fernspeiseschleifen geeignet.

Aufgabe der Erfindung ist es, eine Schaltungsanordnung der eingangs genannten Art so auszubilden, daß Verbraucher in beide Fernspeisestrompfade eingefügt werden können und daß dabei zur Herstellung eines Schleifenschlusses in der Schaltungsanordnung nur ein durch Stromsensoren steuerbarer Verbindungszweipol erforderlich ist. Insbesondere soll in Verbindung mit der Schaltungsanordnung eine möglichst symmetrische Belastung der Fernspeisestrompfade möglich sein.

Man kann in jeder Verbraucherstelle zwei Schaltzusätze vorsehen, derart, daß jeweils einer vor und einer nach den Verbrauchern angeordnet ist.

Gemäß der Erfindung wird die Aufgabe durch die im kennzeichnenden Teil des Patentanspruchs 1 angegebenen Maßnahmen gelöst.

Die sich durch diese Maßnahmen ergebende Schaltungsanordnung ist in der Lage, auch bei Belegung beider Fernspeisestrompfade mit Verbrauchern den Schleifenschluß stets so herzustellen, daß in jeder Energieflußrichtung gesehen die Querverbindung nach den Verbrauchereingängen geschlossen wird und daß sich der den unterbrochenen Fernspeiseabschnitt überwachende Stromsensor zwischen der Querverbindung und dem unterbrochenen Fernspeiseabschnitt befindet. Die Schaltungsanordnung kann auch in Fernspei seeinrichtungen mit einseitiger Fernspeisung und/oder unsymmetrischer Belastung Verwendung finden.

Schließt man die zweite Vierpolschaltung in der im Anspruch 2 angegebenen Weise an die Diodenstromzweige an, so hängt die Richtung des im Verbindungszweipol fließenden Stromes davon ab, von welcher Speisestelle der Strom kommt.

Bildet man in weiterer Ausgestaltung der Erfindung die Schaltungsanordnung in der im Anspruch 3 angegebenen Weise aus, so hat der Strom, der gegebenenfalls durch den Verbindungszweipol fließt, immer die gleiche Polarität.

Bei der in Anspruch 4 angegebenen Weiterbildung der Erfindung sind beide Stromsensoren durch Wicklungen ein und desselben Relais gebildet, wobei jeweils eine Wicklung eine Vormagnetisierung des Relais bewirkt. Ein Schaltzusatz mit vormagnetisierbarem Relais ist aus der DE-PS 30 03 515 an sich bekannt. Der bekannte Schaltzusatz weist jedoch in der Ausführungsform, die für Fernspeiseschleifen mit beidseitiger Speisung bestimmt ist, eine unsymmetrische Belastung der beiden Fernspeisestrompfade auf.

Durch die Maßnahmen nach Anspruch 5 lassen sich bei der Herstellung des Relais unvermeidbare Toleranzen auf einfache Weise ausgleichen.

Eine zweckmäßige Ausführungsform der Erfindung, bei der in Verbindung mit den Maßnahmen nach Anspruch 3 als Verbindungszweipol eine zum Schalten von unipolaren Strömen geeignete Halbleiterschaltung dient, geht aus Anspruch 6 hervor. Eine weitere zweckmäßige Ausführungsform der Erfindung, die ebenfalls auf der Weiterbildung nach Anspruch 3 aufbaut, geht aus Anspruch 7 hervor.

Von besonderem Vorteil ist dabei, daß bei der Ausgestaltung des Verbindungszweipoles von einer vorgegebenen Stromrichtung ausgegangen werden kann, ohne daß hierzu eine Zwischenschaltung einer Gleichrichterbrücke erforderlich ist.

Zweckmäßige Maßnahmen, mit denen sich ein wirksamer Schutz der Stromsensoren gegen Überspannungen erzielen läßt, ohne die Funktion der Stromsensoren zu beeinträchtigen, gehen aus den Ansprüchen 8 und 9 hervor.

Die Maßnahmen nach Anspruch 10 haben den Vorteil, daß auch bei einer Speisung von Gleichstrom-/Gleichspannungsumrichtern sichergestellt ist, daß der Schaltzusatz bei der Prüfung des nächstfolgenden Fernspeiseabschnittes einen definierten niederohmigen Widerstand vorfindet.

Die Erfindung wird anhand der in den Figuren dargestellten Ausführungsbeispiele näher erläutert.

Es zeigen

Fig. 1 eine mit Schaltzusätzen versehene und durch Verbraucher symmetrisch belastete Fernspeiseeinrichtung,

Fig. 2 einen Schaltzusatz mit speiserichtungsabhängiger Polarität des im Querzweig fließenden Stromes,

Fig. 3 einen Schaltzusatz mit speiserichtungsunabhängiger Polarität des im Querzweig fließenden Stromes,

Fig. 4 einen Verbindungszweig mit Halbleiterschalter,

Fig. 5 einen Schaltzusatz mit einem Halbleiterschalter im Querzweig,

Fig. 6 einen Verbindungszweig mit einer Drossel-Diodenanordnung und

Fig. 7 eine Vierpolschaltung eines Schaltzusatzes mit relaisgesteuert kurzschließbaren Verbraucherausgängen.

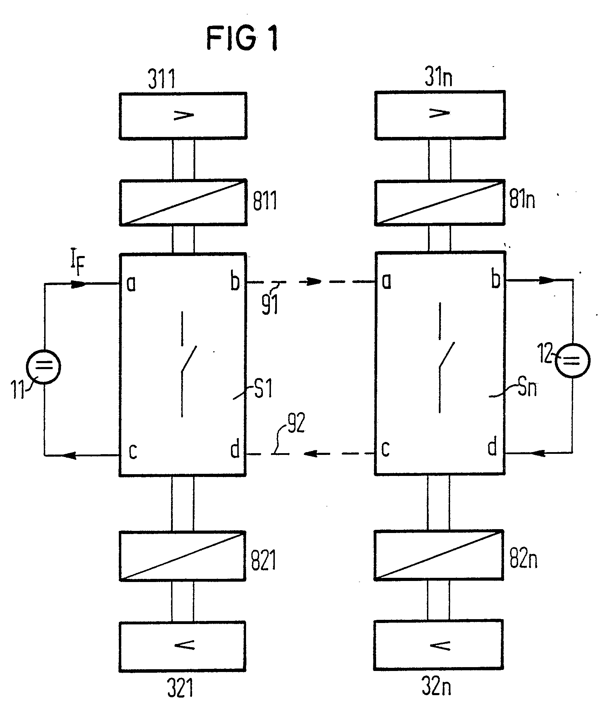

Entsprechend Fig. 1 wird eine Anzahl von Verbrauchern, gebildet durch Zwischenstellen einer Nachrichtenübertragungseinrichtung, mittels Reihenspeisung mit konstantem Gleichstrom $I_F$ gespeist. In jeder Verbraucherstelle, gebildet durch eine Zwischenstelle mit Regeneratoren und/oder Verstärkern sind zwei Verbraucher vorgesehen, deren Eingang jeweils vom Fernspeise-Gleichstrom $I_F$ durchflossen ist. Die Verbraucher sind jeweils ein Leitungsverstärker 311, 321; ... 31n, 32n. Die Leitungsverstärker werden über einen Gleichstrom/Gleichspannungsumrichter 811, 821; ...81n, 82n gespeist. Diese Umrichter können gegebenenfalls entfallen.

Die Verbraucher werden im Fernspeisekreis in Reihenschaltung betrieben. In jeder Zwischenstelle liegt in beiden Fernspeisestrompfaden je ein Verbraucher, um eine gleichmäßige Lastverteilung zu erzielen bzw. eine Kompensation der Brummodulation des Fernspeisestromes im Fall einer Beeinflussung durch induzierte Wechselströme auf der Strecke zu erreichen. Die gleichmäßige Lastverteilung ist besonders vorteilhaft, wenn in den Speisestellen oder in einer der Speisestellen eine Einrichtung zur Symmetrieüberwachung vorgesehen ist, mit der ein Erdschluß im Fernspeisekreis festgestellt werden kann.

Die Fernspeisestrompfade 91 und 92 sind an beiden Enden jeweils an eine Fernspeisestromquelle 11 bzw. 12 angeschlossen, so daß sich eine beidseitige Speisung mit gleichzeitig vorhandener Geräteredundanz ergibt. Dabei ist im Fernspeisekreis eine Reihenschaltung der beiden Fernspeisestromquellen 11 und 12 wirksam. Jede dieser beiden Fernspeisestromquellen 11 und 12 ist in der Lage, die ganze Fernspeisestrecke nach dem Prinzip der sogenannten "heißen Reserve" zu versorgen.

Sobald eine Verbindung zwischen den Fernspeisestrompfaden 91 und 92 auftritt, speist die Fernspeisestromquelle 11 bis zu dieser Stelle. Die Fernspeisestromquelle 12 speist ebenfalls bis zur Verbindungsstelle, so daß die gesamte Strecke weiterhin versorgt bleibt.

Ein unterbrechungsfreier Betrieb der Zwischenstellen auch bei einer Unterbrechung an einer beliebigen Stelle des Fernspeisekreises wird dadurch erreicht, daß in jeder Zwischenstelle ein Schaltzusatz S1 bzw. Sn vorgesehen ist, der bei einer Unterbrechung eines oder beider Fernspeisestrompfade 91 bzw. 92 den Fernspeisekreis vor dieser Unterbrechungsstelle so schließt, daß die Verbraucher in den Zwischenstellen weiter versorgt werden.

Nach Beseitigung der Unterbrechung wird die Adernverbindung am Schaltzusatz selbsttätig aufgehoben.

Der Schaltzusatz wird auf der einen Seite mit den Anschlüssen a und c, auf der anderen Seite mit den Anschlüssen b und d in den Fernspeisekreis eingeschaltet.

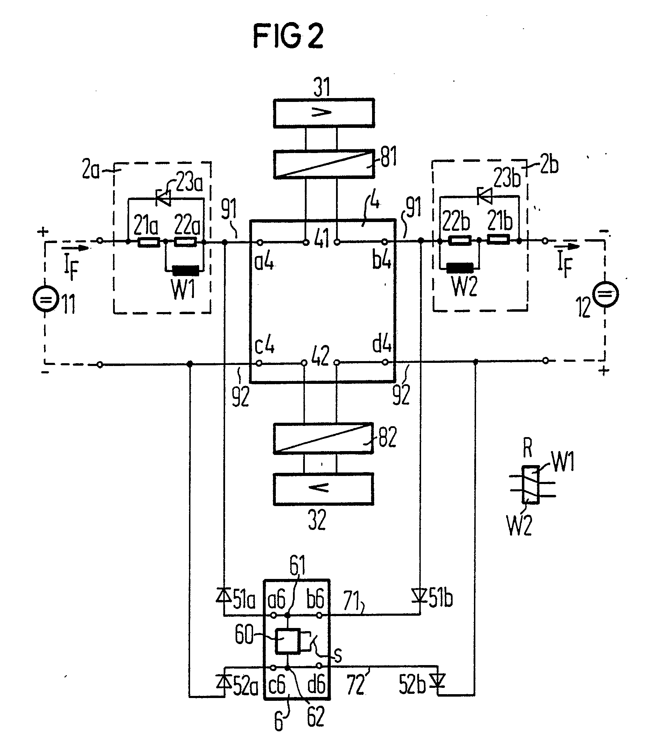

Die Schaltzusätze S1... Sn sind in gleicher Weise aufgebaut. Fig. 2 zeigt einen Schaltzusatz mit Einzelheiten dieses Aufbaues. Dabei ist im vorliegenden Zusammenhang unter einem Schaltzusatz eine Schaltungsanordnung zum selbsttätigen Verbinden der Fernspeisestrompfade 91 und 92 der Fernspeiseschleife zu verstehen, die für den Fall, daß die betriebsmäßige Fernspeiseschleife unterbrochen wird, einen ersatzweisen Schleifenschluß herstellt.

Der in Fig. 2 gezeigte Schaltzusatz enthält die Vierpolschaltungen 4 und 6.

Die erste Vierpolschaltung 4 hat ein Eingangsanschlußpaar a4, c4 und ein Ausgangsanschlußpaar b4, d4. Die Anschlüsse a4 und b4 sind über einen durch den Speiseausgang 41 gebildeten Längszweig miteinander verbunden. Zwischen den Anschlüssen c4 und d4 liegt ein aus dem Speiseausgang 42 bestehender Längszweig. Der Schaltzusatz hat somit einen Speiseausgang je Fernspeisestrompfad.

An den im Fernspeisestrompfad 91 liegenden Speiseausgang 41 ist der Leitungsverstärker 31 mit seinem Versorgungsspannungseingang angeschlossen. Der Versorgungsspannungseingang des Leitungsverstärkers 32 ist mit dem im Fernspeisestrompfad 92 liegenden Speiseausgang 42 verbunden.

Die zweite Vierpolschaltung 6 enthält die beiden Längszweige 61 und 62. Der Längszweig 61 verbindet den Eingangsanschluß a6 unmittelbar mit dem Ausgangsanschluß b6. Der Eingangsanschluß c6 und der Ausgangsanschluß d6 sind über den Längszweig 62 unmittelbar miteinander verbunden. In einem zwischen den beiden Längszweigen liegenden Querzweig ist der Verbindungszweipol 60 angeordnet, der sich mit Hilfe einer an den Steuereingang s angeschlossenen Schalters, im gezeigten Beispiel gebildet durch den Ruhekontakt r des Relais R, wahlweise ein-oder ausschalten bzw. in einen leitenden oder gesperrten Zustand überführen läßt.

Im eingeschalteten Zustand sind die beiden Fernspeisestrompfade über den leitenden Verbindungszweipol miteinander verbunden, so daß ein - wie gegebenenfalls auf der anderen Seite einer Unterbrechungsstelle - ersatzweiser Fernspeisekreis geschlossen ist. Im ausgeschalteten Zustand ist der Verbindungszweipol gesperrt und der Fernspeisestrom fließt über die betriebsmäßige Fernspeiseschleife.

Die erste Vierpolschaltung 4 und die zweite Vierpolschaltung 6 sind sowohl mit ihren Eingängen als auch mit ihren Ausgängen über Diodenstromzweige einander parallel geschaltet. Der Diodenstromzweig 51a liegt zwischen den Anschlüssen a4 und a6, der Diodenstromzweig 52a zwischen den Anschlüssen c4 und c6, der Diodenstromzweig 51b zwischen den Anschlüssen b4 und b6 und der Diodenstromzweig 52 zwischen den Anschlüssen d4 und d6.

Die Diodenstromzweige 51a und 52a sind so gepolt, daß sie für einen Strom, der von der Fernspeisestromquelle 12 kommt und über den Verbindungszweipol 60 fließt, durchlässig und für einen Strom, der von der Fernspeistromquelle 11 kommen könnte und über den Verbindungszweipol 60 flösse, gesperrt sind. Die Diodenstromzweige 51b und 52b sind so gepolt, daß sie für einen Strom, der von der Fernspeisestromquelle 11 kommt und über den Verbindungszweipol 60 fließt, durchlässig und für einen Strom, der von der Speisestromquelle 12 käme und über den Verbindungszweipol 60 flösse, gesperrt sind.

Die Vierpolschaltung 6 ist mit ihren Anschlüssen a6 und c6 unmittelbar mit den Diodenstromzweigen 51a bzw. 52a verbunden. Die Anschlüsse b6 und d6 der Vierpolschaltung 6 sind über zwei unmittelbare Verbindung 71 und 72 mit Den Diodenstromzweigen 51b und 52b zusammengeführt. Die zweite Vierpolschaltung 6 ist dabei so an die Diodenstromzweige 51a, 52a einerseits und 51b, 52b andererseits angeschlossen, daß die Längszweige 61 und 62 des zweiten Vierpols 6 jeweils auf beiden Seiten mit ungleichnamigen Diodenanschlüssen verbunden sind. Im gezeigten Beispiel ist die Kathode der Diode 51b über den Längszweig 61 mit der Anode der Diode 51a und die Kathode der Diode 52a über den Längszweig 62 mit der Anode der Diode 52 verbunden.

Hierdurch ergibt sich, daß die Richtung eines gegebenenfalls über den Verbindungszweipol 60 fließenden Stromes je nach speisender Speisestelle verschieden sein kann.

Der zwischen den beiden Längszweigen 61 und 62 des Vierpols 6 liegende Verbindungszweipol 60 wird durch die beiden als Stromsensoren dienenden Wicklungen W1 und W2 in einen leitenden oder in einen gesperrten Zustand gesteuert.

Die Wicklung W1 ist in der Zweipolschaltung 2a, die Wicklung W2 in der Zweipolschaltung 2b enthalten. Die Zweipolschaltungen 2a und 2b liegen zu beiden Seiten der Vierpolschaltung 4 im Fernspeisestrompfad 91. Die erste Zweipolschaltung 2a ist zwischen der ersten Fernspeisestromquelle 11 und dem Speiseausgang 41 angeordnet. Die zweite Zweipolschaltung 2b liegt zwischen der zweiten Fernspeisestromquelle 12 und dem Speiseausgang 41.

In Abwandlung der in Fig. 2 gezeigten Schaltungsanordnung können die beiden Zweipolschaltungen 2a und 2b gegebenenfalls in verschiedenen Fernspeisestrompfaden 91, 92 liegen.

Der Ruhekontakt r des Relais R ist bei wenigstens einer stromlosen Wicklung W1 bzw. W2 geschlossen. Für den Fall, daß von den Wicklungen W1 und W2 eine den Fernspeisestrom $I_F$ führt und die andere einen Strom feststellt, der mindestens gleich einem vorgegebenen Mindestwert ist, bei dem der folgende Abschnitt des Fernspeisekreises intakt ist, spricht das Relais R an und der Ruhekontakt r öffnet.

Die Wicklungen des Relais R sind so in den Fernspeisestrompfad 91 eingefügt, daß sie gleichsinnige Durchflutungen erzeugen. Die Windungszahlen der beiden Wicklungen W1 und W2 sind gleich groß.

Parallel zu den Wicklungen W1 bzw. W2 ist jeweils ein Abgleichwiderstand 22a bzw. 22b angeordnet. Die Zweipolschaltungen 2a und 2b enthalten jeweils die Parallelschaltung aus Wicklung und Abgleichwiderstand sowie einen in Serie zu dieser Parallelschaltung angeordneten Vorwiderstand 21a bzw. 21b. Parallel zu dieser Reihenschaltung liegt jeweils eine Z-Diode 23a bzw. 23b. An die Stelle der Z-Diode kann jeweils eine andere Schwellwertschaltung, insbesondere eine oder mehrere Dioden, treten.

Der Widerstandswert des Vorwiderstandes 21a bzw. 21b und die Zenerspannung der Z-Diode sind jeweils derart bemessen, daß die Spannungsbegrenzung beim Nennwert des Fernspeisestromes $I_F$ wirksam und bei dem Strom, der in der Wicklung W1 bzw. W2 den Ansprechstrom des Relais fließen läßt, noch nicht wirksam ist.

Die Größe des Vorwiderstandes 21a bzw. 21b und des Schwellwertes der Schwellwertschaltung sind so aufeinander abgestimmt, daß einerseits bei geschlossenem Querzweig bzw. stromführenden Verbindungszweipol 60 der beim Ansprechen des Relais R auftretende Spannungsabfall an der Serienschaltung ausreichend unterhalb der Schwellwertspannung der Schwellwertschaltung liegt und andererseits auf der den vollen Fernspeisestrom $I_F$ führenden Seite der Vierpolschaltung 4 die Schwellwertspannung einen so großen Stromanteil durch die Reihenschaltung zur Folge hat, daß sich eine definierte Vormagnetisierung des Relais R ergibt. Diese Anordnung schützt zugleich das Relais R gegen eine Übererregung, insbesondere durch Beeinflussungsströme oder durch Ströme, die sich dann aufgrund einer im Strom liefernden Speisegerät enthaltenden Siebkapazität ergeben, wenn der Ruhekontakt r den Querzweig nach einer am Anfang der Fernspeisestrecke auftretenden Unterbrechung schließt und so den Querzweig einschaltet.

Da die Ansprecherregung des Relais R für verschiedene Exemplare innerhalb eines Toleranzbereiches verschieden groß sein kann, ist es zweckmäßig, jeder Wicklung einen so groß gewählten Widerstand 22a, 22b parallel zu schalten, daß man einen einheitlichen Ansprechstrom erhält.

Damit ergeben sich auch für die Vormagnetisierung gleichbleibende Voraussetzungen. Der Vorwiderstand 21a, bzw. 21b braucht nur die wesentlich geringeren Widerstandstoleranzen der Parallelschaltungen aus Wicklung und parallel liegenden Abgleichwiderstand so auszugleichen, daß man für die Serienschaltung immer den gleichen Gesamtwiderstand erhält. Dieser Gesamtwiderstand bildet eine Belastung, an der die Begrenzung der Spannung auf den Wert der Schwellenspannung der Schwellwertschaltung stattfindet. Zur Erzeugung der Schwellenspannung können eine oder zwei in Serie zueinander angeordnete Dioden genügen.

Es ist zweckmäßig, den Vorwiderstand 21a bzw. 21b so zu wählen, daß der Spannungsabfall an der vom Aufschaltstrom $I_A$ durchflossenen Serienschaltung etwa nur den halben Wert der Zenerspannung der Z-Diode 23a bzw. 23b bzw. der Schwellenspannung der Schwellwertschaltung beträgt. In diesem Fall ist der Vormagnetisierungsstrom $I_V$ in der anderen Wicklung etwa $I_V = 2 \times I_A$. Bei dieser Dimensionierung wird zweckmäßigerweise von der im Toleranzbereich höchsten Ansprecherregung des Relais R, d.h. ohne Berücksichtigung des Parallelwiderstandes 22a bzw. 22b ausgegangen. Ausgehend von dem für eine bestimmte Relaisbauform konstanten Maximalwert der Ansprecherregung und dem Widerstandsfaktor $A_R$ erhält man für jede Wicklung die

Windungszahl

$$W = \phi_A / 3 \, I_A$$

und hieraus den Wicklungswiderstand

$$R_w = 2A_R \bullet w^2.$$

Mit der Schwellenspannung Us der Schwellwertschaltung ergibt sich für den Vorwiderstand

$$R_V = \frac{Us}{2I_a} - R_w$$

Beispielsweise ergibt sich bei

$I_A = 50$ mA,

$\phi_{Amax} = 80$ AW,

$A_R = 10\mu\Omega/w^2$

und Us = $2 \times 0,8$ V eine Windungszahl w = 533, ein Wicklungswiderstand Rw = 5,7 Ohm und ein Vorwiderstand $R_v$ = 10,3 Ohm.

Würde in diesem Beispiel ein Exemplar des Relais R schon bei einer Ansprecherregung $\phi$ = 60 AW ansprechen, dann müßte jeder Wicklung, um auch hier für diese auf 150 mA Ansprechstrom zu kommen, ein Widerstand $R_p$ = 17,1 Ohm parallelgeschaltet werden, wodurch sich der wirksame Gesamtwiderstand der Parallelschaltung auf einen wirksamen Wicklungswiderstand $R'_w$ = 4,3 Ohm verringert. Entsprechend wird dann der Vorwiderstand $R'_v$ = 11,7 Ohm sein.

Das Öffnen des Ruhekontaktes r wird durch die Addition der magnetischen Teilerregungen über die beiden Wicklungen des Relais R, d.h. durch eine logische UND-Bedingung veranlaßt, wenn der Strom im abgehenden Fernspeiseweg den Ansprechwert erreicht oder überschreitet.

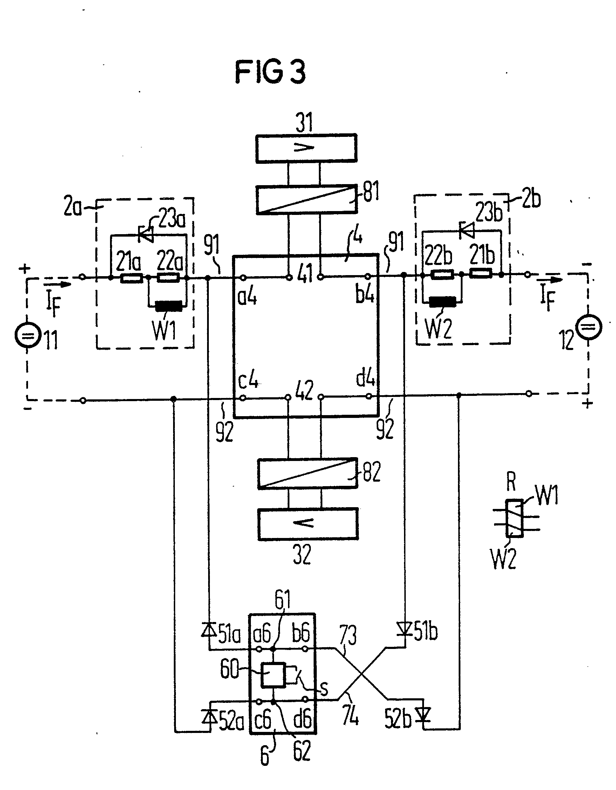

Der in Fig. 3 gezeigte Schaltzusatz stimmt mit dem nach Fig. 2 weitgehend überein. Unterschiedlich ist lediglich die Art, in der die zweite Vierpolschaltung 6 mit den Diodenzweigen 51a, 51b, 52a und 52b verbunden ist. Die zweite Vierpolschaltung 6 ist über die unmittelbaren Verbindungen 73 und 74 derart an die Diodenstromzweige 51a, 52a angeschlossen, daß die Längszweige 61, 62 jeweils auf beiden Seiten mit gleichnamigen Anschlüssen der Dioden 51a und 52b bzw. 52a und 51b verbunden sind. Hierdurch ergibt sich, daß die Richtung des gegebenenfalls über den Verbindungszweipol fließenden Stromes immer gleich ist.

Im gezeigten Ausführungsbeispiel liegen die gekreuzten Verbindungen 73 und 74 zwischen der zweiten Vierpolschaltung 6 und den Diodenzweigen 51b und 52b. Dasselbe Ergebnis wird erzielt, wenn die gekreuzten Verbindungen statt dessen zwischen den Diodenstromzweigen 51a und 52a und der zweiten Vierpolschaltung 6 angeordnet sind und die Anschlüsse b6 und d6 entsprechend Fig. 2 über Verbindungen 71 und 72 mit den Diodenstromzweigen 51b und 52b verbunden sind.

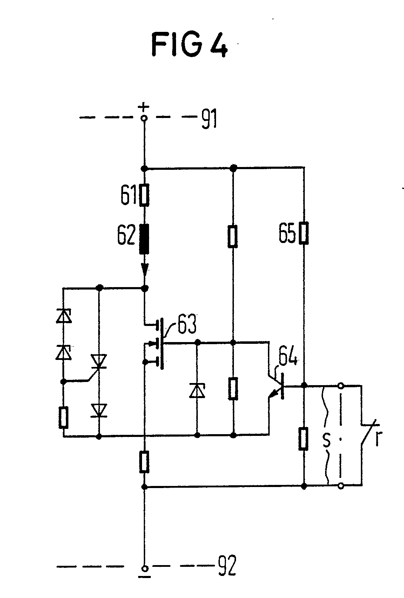

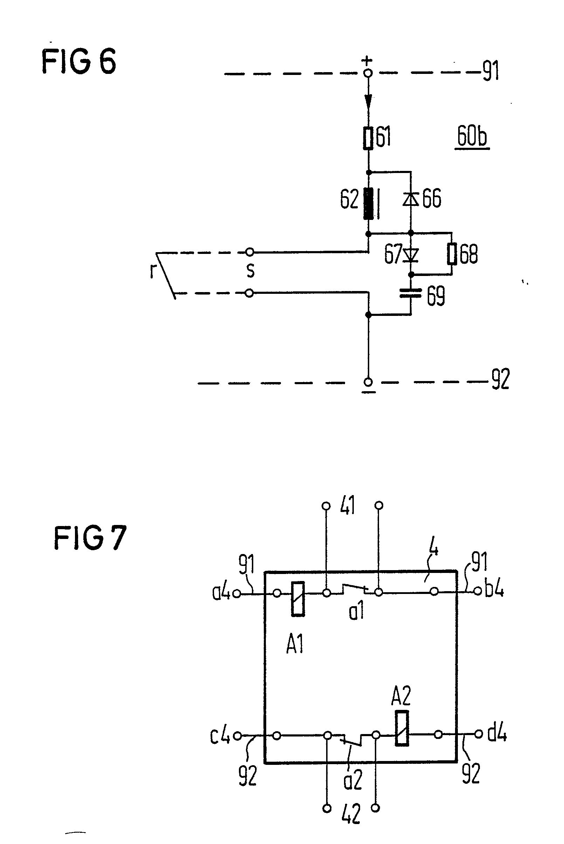

Der Verbindungszweipol 60 der Schaltungsanordnung nach Fig. 2 muß für beide Stromrichtungen geeignet sein. Beispielsweise besteht er aus einer Serienschaltung mit dem Relaiskontakt r und einem Widerstand und/oder einer Drossel. Soll eine Anordnung Verwendung finden, die für nur eine Stromrichtung geeignet ist, insbesondere ein Verbindungszweipol nach Fig. 4 oder 6, so ist dieser eine Gleichrichter-Brückenschaltung vorzuschalten.

Demgegenüber hat die Schaltungsanordnung nach Fig. 3 den Vorteil, daß Verbindungszweipole, die für nur eine Stromrichtung geeignet sind, insbesondere die in Fig. 4 und Fig. 6 gezeigten Verbindungszweipole, als solche Verwendung finden können.

Fig. 4 zeigt ein Ausführungsbeispiel für den Verbindungszweipol 60 in Fig. 2 und 3. Als Verbindungszweipol dient eine durch den Ruhekontakt r eines Relais gesteuerte Halbleiterschaltungsanordnung. Diese Halbleiterschaltung ist - abgesehen von der Art, in der der Transistor 64 angesteuert wird, bereits aus der DE-PS 34 25 535 bekannt. Der Querzweig, der gegebenenfalls den Schleifenschluß herstellt, enthält einen Feldeffekttransistor 63, dessen Drain-Source-Strecke in Serie zur Drossel 62 und zum Widerstand 61 liegt. Der Feldeffekttransistor 63 wird über den bipolaren Transistor 64 angesteuert, dessen Basis über je einen Widerstand mit den beiden Fernspeisestrompfaden 91 und 92 verbunden ist. Parallel zur Basis-Emitter-Strecke des Transistors 64 liegt der Ruhekontakt r.

Ein weiteres Beispiel für einen als Halbleiterschaltung ausgebildeten Verbindungszweipol eines Schaltzusatzes geht aus der DE-PS 34 25 533 hervor.

Stellt man den Schleifenschluß mittels einer den Querzweig des Schaltzusatzes bildenden oder im Querzweig liegenden Halbleiterschaltung her, so braucht der Ruhekontakt r in vorteilhafter Weise nicht für hohe Spannungen und/oder Schaltleistungen ausgelegt zu sein. Insbesondere kann für den Ruhekontakt r des Relais gegebenenfalls ein Kontaktschutz entfallen. Außerdem braucht beim Aufbau des Relais nur die Spannungsfestigkeit zwischen Wicklungen und Kontakt berücksichtigt zu werden.

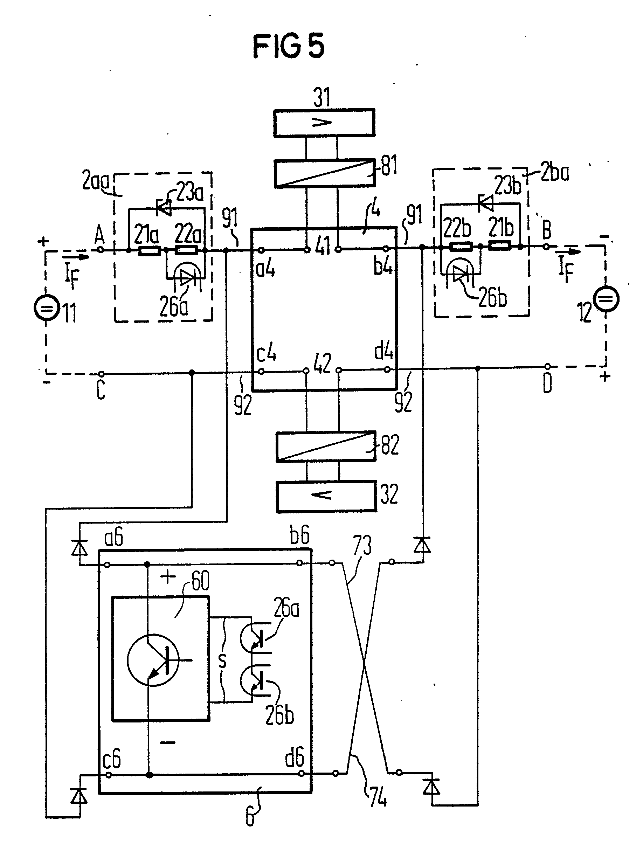

Fig. 5 zeigt einen Schaltzusatz, bei dem der als Halbleiterschaltung z.B. nach Fig. 4 ausgebildete Verbindungszweipol 60 auf elektronischem Wege gesteuert wird. Als Beispiel für eine elektronische Steuerung sind Optokoppler gezeigt, die wegen der damit erzielten Potentialtrennung vorzugsweise einzusetzen sind. Ausgehend von dem Schaltzusatz nach Fig. 3 dienen als Stromsensoren anstelle der Wicklungen eines Relais die Dioden D1, D2 der Optokoppler 24a und 24b. Diese liegen in den Zweipolschaltungen 2aa und 2ba. Die Emitter-Kollektor-Strecken und der Optokoppler liegen in Serie zueinander am Steuereingang s des Verbindungszweipoles 60.

Die Dioden der Optokoppler ersetzen die Wicklungen des Relais R und sind mit den Widerständen 21a, 22a bzw. 21b, 22b sowie den Z-Dioden 23a bzw. 23b so beschaltet, daß der größte Teil des Fernspeisestromes über die Z-Dioden 23a bzw. 23b fließt und die Dioden der Optokoppler D1 und D2 nur einen in zulässiger Größe liegenden Teil des Fernspeisestromes führen. Für den wesentlich niedrigeren Strom, der bei der Prüfung der abgehenden Fernspeiseleitungen zu einem Sperren des Verbindungszweipoles 60 führt, ist diese Begrenzung noch nicht wirksam.

Die Reihenschaltung der Transistorstrecken der Optokoppler 26a und 26b bildet eine logische UND-Bedingung für das Ansteuern des Verbindungszweipoles 60. Sie wird z.B. anstelle des Transistors 64 in den in Fig. 4 dargestellten Verbindungszweipol eingefügt. Der Verbindungszweipol wird gesperrt, wenn beide Stromsensoren einen Strom feststellen, der den Ansprechwert erreicht oder überschreitet.

Der in Fig. 6 gezeigte Verbindungszweipol enthält Dioden, die die gezeigte Polarität des im Querzweig fließenden Stromes verlangen. Der Verbindungszweipol kann bei einem Schaltzusatz nach Fig. 2 über eine Gleichrichter-Brückenschaltung und bei einem Schaltzusatz nach Fig. 3 unmittelbar in die zweite Vierpolschaltung 6 eingesetzt werden. Die Drossel 62 mit der Diode 66 sowie die Anordnung, bestehend aus dem Kondensator 69, der Diode 67 und dem Widerstand 68 bilden einen an sich bekannten und hier realisierbaren optimalen Schutz für den Ruhekontakt r beim Schließen und Öffnen.

Bei der in Fig. 7 gezeigten ersten Vierpolschaltung 4 ist in Serie zum Speiseausgang 41 eine Wicklung des Relais A1 und parallel zum Speiseausgang 41 der Ruhekontakt a1 des Relais A1 angeordnet. Ferner ist in Serie zum Speiseausgang 42 eine Wicklung des Relais A2 und parallel zum Speiseausgang 42 der Ruhekontakt a2 des Relais A2 angeordnet. Der Ansprechwert des Relais A1 bzw. A2 ist jeweils derart bemessen, daß es bei einem Strom anspricht, der um einen vorgegebenen Betrag kleiner als der Nennwert des Fernspeisestromes $I_F$ ist.

Für das Öffnen des Querzweiges im Verbindungszweipol 60 ist der Schleifenwiderstand des nächstfolgenden Fernspeiseabschnittes maßgebend. Werden an den Speiseausgängen 41, 42 zur Lieferung von verschiedenen Betriebsspannungen Gleichstrom/Gleichspannungsumrichter vorgesehen, so kann der Eingangswiderstand der im nächstfolgenden Speiseabschnitt liegenden Umrichter bei der am Querzweig des Schaltzusatzes anstehenden Meßspannung von z.B. nur 40 V - schon so hoch sein, daß der Schleifenwiderstand des nächstfolgenden Fernspeiseabschnittes einen als Körperwiderstand bei Berührung definierten Wert von z.B. 2000 Ohm überschreitet. Bei so hohen Widerständen dürfen die Stromsensoren jedoch nicht ansprechen, da dann bei Berührung von freiliegenden, die Fernspeisestrompfade 91, 92 bildenden Speiseadern ein Öffnen des Querzweiges möglich und an der Unterbrechungsstelle ein Personenschutz nicht mehr gewährleistet wäre.

Um auch bei der Fernspeisung von solchen Umrichtereingängen einen definierten, niederohmigen Widerstand des nächstfolgenden Fernspeiseabschnittes sicher zu stellen, ist in jedem Fernspeisestrompfad 91, 92 der Eingang des Verbrauchers mit dem Ruhekontakt a1, a2 des Relais A1, A2 überbrückt. Die Erregerwicklung des Relais A1, A2 liegt im Fernspeisestrompfad in Stromrichtung gesehen vor dem Verbrauchereingang. Dieses Relais A1 bzw. A2 öffnet seinen Ruhekontakt a1 bzw. a2 erst dann, wenn der Fernspeisestrom $I_F$ nahezu den Sollwert erreicht hat. Dies ist aber nur dann der Fall, wenn in der vorherliegenden Zwischenstelle der Querzweig bzw. Verbindungszweipol bereits geöffnet wurde.

Die in Fig. 7 gezeigte Anordnung hat bei Gleichstrom-/Gleichspannungswandlern auch den Vorteil, daß bei Freigabe des Eingangs das Anschwingen des Umrichters erst bei nahezu voller Größe des Fernspeisestromes $I_F$ einsetzt.

Die Anordnung ist besonders für Einrichtungen zur Fernspeisung von Zwischenregeneratoren auf PCM-Nachrichtenübertragungsstrecken mit Glasfaserkabeln geeignet, deren Stromversorgungs-Eingänge über ein getrennt verlegtes Fernspeisekabel mit Konstantstrom betrieben werden.

**Ansprüche**

1. Schaltungsanordnung zum selbsttätigen Verbinden der Fernspeisestrompfade (91, 92) einer mittels einer ersten Fernspeisestromquelle (11) und einer zweiten Fernspeisestromquelle (12) beidseitig gespeisten Fernspeiseschleife im Falle einer Unterbrechung der Fernspeiseschleife, für Fernspeiseeinrichtungen zur Speisung elektrischer Verbraucher mittels Gleichstrom-Reihenspeisung, wobei in einem der beiden Fernspeisestrompfade (91, 92) ein Speiseausgang zum Anschließen mindestens eines der ferngespeisten Verbraucher liegt und in einem zwischen den beiden Fernspeisestrompfaden (91, 92) angeordneten Querzweig ein Verbindungszweipol (60) angeordnet ist, der durch einen mittels zweier Stromsensoren steuerbaren Schalter ein-oder ausschaltbar ist, wobei die Stromsensoren in je einer von zwei jeweils in einem der Fernspeisestrompfade (91, 92) liegenden Zweipolschaltungen (2a, 2b; 2aa, 2ba) angeordnet sind, ·von denen eine erste Zweipolschaltung (2a, 2aa) zwischen der ersten Fernspeisestromquelle (11) und dem Speiseausgang (41) und die zweite zwischen der zweiten Fernspeisestromquelle (12) und dem Speiseausgang (42) angeordnet ist und der Schalter durch die beiden Stromsensoren derart steuerbar ist, daß der Schalter bei wenigstens einem stromlosen Stromsensor (20a, 20b) geschlossen ist und für den Fall, daß von den Stromsensoren einer den Fernspeisestrom ($I_F$) und der andere einen einen vorgegebenen Mindestwert übersteigenden Strom führt, geöffnet wird,
**dadurch gekennzeichnet,**
daß zur Gewinnung von einem Speiseausgang (41,42) je Fernspeisestrompfad (91, 92) eine erste Vierpolschaltung (4) vorgesehen ist, bei der ein Eingangsanschlußpaar (a4, c4) mit einem Ausgangsanschlußpaar (b4, d4) über zwei jeweils aus einem Speiseausgang (41, 42) bestehende Längszweige miteinander verbunden sind und daß der Verbin dungszweipol (60) in einem Querzweig einer zweiten Vierpolschaltung (6) angeordnet ist, die zwei Längszweige (61, 62) enthält, die jeweils einen der beiden Eingangsanschlüsse (a6, c6) mit einem der beiden Ausgangsanschlüsse (b6, d6) unmittelbar verbinden und daß die erste Vierpolschaltung (4) und die zweite Vierpolschaltung (6) mit ihren Eingängen und mit ihren Ausgängen über je zwei derart gepolte Diodenstromzweige (51a, 52a; 51b, 52b) einander parallel geschaltet sind, daß jeder Diodenstromzweig (51a, 52a; 51b, 52b) für den Strom der auf der gegenüberliegenden Seite der Vierpole (4, 6) liegenden Speisestromquelle (11,12) durchlässig und für den Strom der auf derselben Seite des Vierpols (4, 6) liegenden Speisestromquelle (12,11) gesperrt ist.

2. Schaltungsanordnung nach Anspruch 1,
**dadurch gekennzeichnet,**
daß die zweite Vierpolschaltung (6) derart an die Diodenzweige (51a, 52a; 51b, 52b) angeschlossen ist, daß die Längszweige (61, 62) jeweils auf beiden Seiten mit ungleichnamigen Diodenanschlüssen verbunden sind.

3. Schaltungsanordnung nach Anspruch 1,
**dadurch gekennzeichnet,**
daß die zweite Vierpolschaltung (6) derart an die Diodenzweige (51a, 52a; 51b, 52b) angeschlossen ist, daß die Längszweige (61, 62) jeweils auf beiden Seiten mit gleichnamigen Diodenanschlüssen verbunden sind.

4. Schaltungsanordnung nach einem der Ansprüche 1 bis 3,
**dadurch gekennzeichnet,**
daß die beiden Stromsensoren durch Wicklungen (W1, W2) eines Relais (R) gebildet sind und daß der im Verbindungszweipol (60) angeordnete steuerbare Schalter durch einen Ruhekontakt (r) des Relais (R) gebildet ist und daß die Wicklungen (W1, W2) derart angeschlossen sind, daß sie gleichsinnige Durchflutungen erzeugen und daß die Windungszahlen der beiden Wicklungen (W1, W2) wenig-stens annähernd gleich groß bemessen sind.

5. Schaltungsanordnung nach Anspruch 4,
**dadurch gekennzeichnet,**
daß parallel zur Wicklung (W1, W2) jeweils ein Abgleichwiderstand (22a, 22b) angeordnet ist.

6. Schaltungsanordnung nach Anspruch 3,
**dadurch gekennzeichnet,**
daß der steuerbare Schalter durch eine zum Schalten von unipolaren Strömen geeignete Halbleiterschaltung (67) gebildet ist und daß die Stromsensoren durch Optokoppler (24a, 24b) gebildet sind, die mit ihren Diodenteilen (D1, D2) in den Zweipolschaltungen (2aa,2ba) liegen und deren Emitter-Kollektor-Strecken in Serie zueinander angeordnet sind.

7. Schaltungsanordnung nach Anspruch 3,
**dadurch gekennzeichnet,**
daß der Verbindungszweipol (60) eine Drossel (62) mit Dioden-Parallelstromzweig (66) und/oder einen steuerbaren Schalter mit Dioden-Parallelstromzweig (67, 68, 69) enthält.

8. Schaltungsanordnung nach einem der Ansprüche 1 bis 7,
**dadurch gekennzeichnet,**
daß die Zweipolschaltungen (2a, 2b) jeweils einen in Serie zum Stromsensor angeordneten Vorwiderstand (21a, 21b) und einen parallel zur Serienschaltung aus Stromsensor und Vorwiderstand (21a, 21b) angeordneten Spannungsbegrenzer (Z-Diode 23a, 23b) enthalten und daß der Widerstandswert des Vorwiderstandes (21a, 21b) und der Schwellwert der Spannung, bei dem der Spannungsbegrenzer wirksam wird, derart bemessen sind, daß die Spannungsbegrenzung beim Nennwert des Fernspeisestromes ($I_F$ ) wirksam und beim unteren Grenzwert des Stromes, der den elektronischen Schalter zum Öffnen des Ruhekontaktes (r) veranlaßt, noch nicht wirksam ist.

9. Schaltungsanordnung nach Anspruch 7 oder 8,
**dadurch gekennzeichnet,**
daß der Vorwiderstand (21a, 21b) derart bemessen ist, daß beim Ansprechwert des elektronischen Schalters der Spannungsabfall an der Reihenschaltung, etwa gleich dem halben Wert der Schwellenspannung des Spannungsbegrenzers (Z-Diode 23a, 23b) ist.

10. Schaltungsanordnung nach einem der Ansprüche 1 bis 9,

**dadurch gekennzeichnet,**

daß im Verbrauchervierpol (4) in Serie zu den Speiseausgängen (41, 42) jeweils eine Wicklung eines einen Ruhekontakt (a1, a2) aufweisenden Relais (A1, A2) und parallel zu den Speiseausgängen (41, 42) jeweils der Ruhekontakt (a1, a2) des Relais (A1, A2) angeordnet ist und daß der Ansprechwert des Relais (A1, A2) jeweils derart bemessen ist, daß es bei einem Strom anspricht, der um einen vorgegebenen Betrag kleiner als der Nennwert des Fernspeisestromes ($I_F$) ist.

# FIG 1

FIG 2

# FIG 3

# FIG 4

# FIG 5

**FIG 6**

**FIG 7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | EP-A-0 012 238 (SIEMENS) <br> * Seite 6, Zeile 24 - Seite 9, Zeile 33 * <br><br> --- | 1,2 | H 04 B 3/44 |
| A | EP-A-0 033 471 (SIEMENS) <br> * Seite 1, Abschnitt 1; Seite 8, Zeile 13 - Seite 11, Zeile 13; Seite 12, Zeile 18 - Seite 13, Zeile 12 * & DE-A-3 003 515 (Kat. D) <br><br> ----- | 1,4 | |

RECHERCHIERTE
SACHGEBIETE (Int. Cl 4)

H 04 B

Der vorliegende Recherchenbericht wurde für alle Patentansprüche erstellt.

| Recherchenort <br> DEN HAAG | Abschlußdatum der Recherche <br> 07-09-1987 | Prüfer <br> HOLPER G.E.E. |
|---|---|---|